# EUROPEAN PATENT APPLICATION

(11) **EP 3 229 092 A1**
(43) Date of publication of application: **11.10.2017**
(21) Application number: 16198590.8
(22) Date of filing: 14.11.2016
(51) Int. Cl.: G05B 23/02

(54) **METHOD OF PROVIDING A MONITORING SCREEN**

(30) Priority: 04.04.2016 KR 20160040984
(71) Applicant: LSIS Co., Ltd., Gyeonggi-do 14119 (KR)
(72) Inventor: YUN, Jang-Hyeok, Gyeonggi-do 14118 (KR); KONG, Shin-Jo, Gyeonggi-do 14118 (KR); BAE, Ae-Kyoung, Gyeonggi-do 14118 (KR); YOON, Yeo-Chang, Gyeonggi-do 14118 (KR); LEE, Seok-Chan, Gyeonggi-do 14118 (KR); LEE, Seung-Ju, Gyeonggi-do 14118 (KR)
(74) Representative: Zacco Sweden AB

(57) **Abstract**

A method of providing a monitoring screen for controls of a system includes receiving (202) a type of a monitoring screen which a user intends to generate; receiving (204) characteristics of the monitoring screen from the user; obtaining (206) initial generation information corresponding to the type and the characteristics received from the user; and outputting (208) an initial monitoring screen on a display unit based on the initial generation information. The present disclosure may advantageously facilitate more quickly and easily composing a monitoring screen for controls of systems such as a SCADA, a DCS, an EMS and a MG.

## Description

### BACKGROUND

### 1. Technical Field

The present disclosure relates to a method of providing monitoring screen composition functions, and more particularly, a method of providing monitoring screen composition functions for controls of systems such as a SCADA, a DCS, an EMS, a DMS and a MG.

### 2. Description of the Related Art

Recently, there are increasing demands for monitoring sensing values of an apparatus installed in a field through systems such as a SCADA (supervisory control and data acquisition), a DCS (distributed control), an EMS (energy management) and a MG (micro grid), and for remotely controlling various apparatuses. For the controls of such a system, a user uses a monitoring screen displayed through a terminal device such as a computer. The user monitors data, which is indicated by facilities installed in the field, through the monitoring screen and gives control commands as necessary.

Such a monitoring screen is typically composed by the user through, e.g., a graphic editor. In the related art, the user uses the graphic editor to arrange objects or figures, which correspond to the facilities installed on the field, on an empty screen. Then, the user has to couple the objects into consideration of actual coupling relationships between the facilities and associate data with each of the objects. For example, in an EMS system, fundamentally, at a power generation phase and a power transmission phase, a generator and a breaker are represented as objects and, at a power distribution phase, a special facility such as a D/L is represented as an object.

However, upon using the graphic editor according to the prior art, the user has to arrange all of the objects all over again and establish their coupling relationships and data manually one by one whenever the monitoring screen corresponding to each system is composed. As such, the existing graphic editor has problems in that it takes much time for a user to compose a monitoring screen and that the user has to unnecessarily repeat the performance of the same tasks.

### SUMMARY

It is an aspect of the present disclosure to provide a method of providing monitoring screen composition functions which may facilitate more quickly and easily composing a monitoring screen for controls of systems such as a SCADA, a DCS, an EMS and a MG.

Other objects of the present disclosure are not limited to the above-described object and other objects and advantages can be appreciated by the following description described with reference to the embodiments of the present disclosure. Further, it will be easily appreciated that the objects and advantages of the present invention can be realized by means and a combination thereof recited in the appended claims.

In accordance with an aspect of the present invention, a method of providing monitoring screen composition functions for controls of a system includes receiving a type of a monitoring screen to be created; receiving characteristics of the monitoring screen from the user; obtaining initial generation information corresponding to the type and the characteristics received from the user; and outputting an initial monitoring screen on a display unit based on the initial generation information.

The present disclosure as described above may advantageously facilitate more quickly and easily composing a monitoring screen for controls of systems such as a SCADA, a DCS, an EMS and a MG.

### BRIEF DESCRIPTION OF DRAWINGS

FIG. 1 is a block diagram illustrating a system configuration according to an embodiment of the present disclosure.
FIG. 2 is a flowchart of a method of providing monitoring screen composition functions according to an embodiment of the present disclosure.
FIGS. 3 and 4 are exemplary views of screen configurations of a monitoring screen composition tool displayed on a user's terminal according to an embodiment of the present disclosure.
FIG. 5 is an embodiment of an initial monitoring screen outputted on a display unit based on initial generation information.
FIG. 6 is another embodiment of an initial monitoring screen outputted on a display unit based on initial generation information.

### DETAILED DESCRIPTION

The above objects, features and advantages will become apparent from the detailed description with reference to the accompanying drawings. Embodiments are described in sufficient detail to enable those skilled in the art in the art to easily practice the technical idea of the present disclosure. Detailed disclosures of well known functions or configurations may be omitted in order not to unnecessarily obscure the gist of the present disclosure. Hereinafter, embodiments of the present disclosure will be described in detail with reference to the accompanying drawings. Throughout the drawings, like reference numerals refer to like elements.

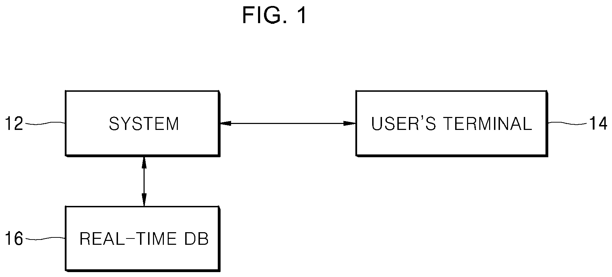

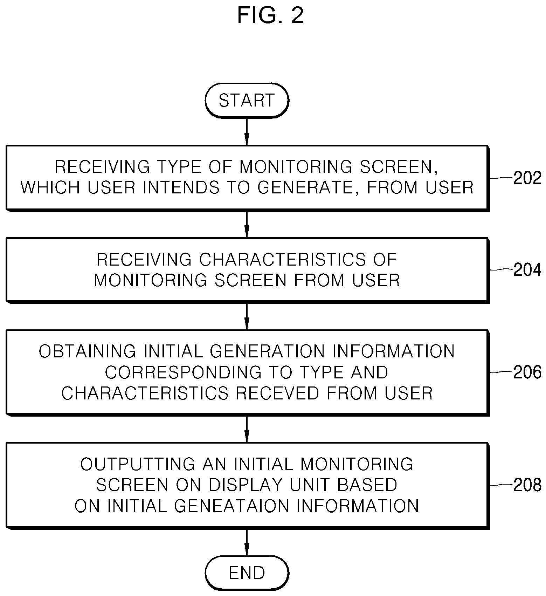

FIG. 1 is a block diagram illustrating a system configuration according to an embodiment of the present disclosure, and FIG. 2 is a flowchart of a method of providing monitoring screen composition functions according to an embodiment of the present disclosure. Hereinafter, a method of providing monitoring screen composition functions according to an embodiment of the present disclosure will be described in detail with reference to FIGS. 1 and 2.

Referring to FIG. 1, a user monitors data or state information of field facilities, which is collected by a system 12, through a monitoring screen displayed on a display unit of a user's terminal 14. Further, the user gives control commands on each of the facilities through the system 12 as necessary. In FIG. 1, the system 12 collects the data or state information of the facilities installed on the field and delivers the user's control commands on each of the facilities. Examples of the system 12 may include a SCADA system, a DCS system, an EMS system, a MG system and so on, but are not limited thereto.

The system 12 may receive designated data or state information in real-time from the facilities installed on the field, and may store the received data or state information on a real-time DB 16. The system 12 may transmit the data or state information stored on the real-time DB 16 to the user's terminal 14 pursuant to a user's request.

The present disclosure relates to a method of providing functions which facilitate a user to more quickly and easily compose a monitoring screen suitable for the system 12 through the user's terminal 14 in an environment of the described-above configuration.

Referring to FIG. 2, the user's terminal 14 first receives the type of a desired monitoring screen to be created from a user (202). For example, the user's terminal 14 may provide the user with a list of types of the monitoring screens such as a single line diagram, a tabular and an OCS (OLE Control eXtension) through the display unit. The user may choose the type of the desired monitoring screen, e.g., the single line diagram, from the list displayed on the display unit.

The single line diagram herein means a screen on which the facilities installed on the field are displayed using various figures. In the single line diagram, each of the facilities installed on the field is displayed as an object and the coupling or linking relationships between the facilities are represented by, e.g., lines coupling the objects. Further, data (e.g., temperature, current, etc.) or state information indicated by each of the facilities may be indicated therein together with the objects.

The tabular herein means a screen on which data or state information indicated by the facilities installed on the field is indicated in a form of table. On the tabular screen, each of the facilities is displayed based on certain criteria (e.g., name, installation place and the like). The data or state information indicated by each of the facilities is further displayed on the tabular screen together with a name of each of the facilities.

An OCX screen herein means a monitoring screen configured by invoking components which have been previously generated. The OCX screen is implemented by an Object Linking and Embedding (OLE) function. The OLE means a technology to allow linking and embedding subject files and programs. For example, the OLE may refer to embedding diagrams into a Microsoft Word in use or embedding documents employing special template functions into a Microsoft Word in use. Controlling OLE functions may allow necessary information to be obtained and various resources to be shared with other programs. The present disclosure may generate to store functions required to compose a monitoring screen in a form of components and may invoke the stored components to generate the OCX screen.

Next, the user's terminal 14 receives characteristics of the monitoring screen to be created from a user (204). According to the present disclosure, the characteristics of the monitoring screen may be determined according to a variety of criteria. For example, the user's terminal 14 may provide the user with the type of the system 12, i.e., SCADA, DCS, EMS, MG, etc., as a list of characteristics. Further, the user's terminal 14 may provide the user with a list of places or regions, i.e., stations, which each of the system is installed on/in. Then, the user may enter the characteristics of the monitoring screen in an order of, e.g., SCADA (the type of the system) - subway (place) - Seoul (region), through the list provided by the user's terminal 14.

When the type and the characteristics of the monitoring screen are entered by the user, the user's terminal 14 obtains an initial generation information corresponding to the type and the characteristics entered by the user (206). According to an embodiment of the present disclosure, the initial generation information corresponding to the type and the characteristics of the monitoring screen may be stored on an internal or external storage (not shown) of the user's terminal 14. The user's terminal 14 may obtain the initial generation information from the storage based on the type and the characteristics entered by the user.

According to an embodiment of the present disclosure, the initial generation information may contain one or more object information corresponding to the type and the characteristics of the monitoring screen, link information between objects, and object data information assigned to each of the objects. The object herein means the facilities, which are installed on the field, represented by figures or symbols. In addition, the link information is information indicating the coupling relationships between the objects and may be represented by figures and symbols coupling the objects. The object data information indicates data (e.g., temperature or current) or state information (e.g., the openings and/or the closings of the objects) indicated by the respective facilities.

In turn, the user's terminal 14 outputs a monitoring screen on the display unit based on the obtained initial generation information (208). Although not shown in FIG. 2, Step 208 of outputting the monitoring screen includes displaying one or more objects on the display unit based on the object information; representing the coupling relationships between the objects based on the link information; and indicating object data corresponding to each of the objects based on the object data information.

According to an embodiment of the present disclosure, Step 208 of outputting the monitoring screen includes generating predefined ports on links between the objects based on the link information contained in the initial generation information. Further, according to an embodiment of the present disclosure, Step 208 of outputting the monitoring screen includes generating ports other than the predefined ports on the links between the objects based on the link information contained in the initial generation information.

Meanwhile, according to an embodiment of the present disclosure, the type or the characteristics of the monitoring screen which the user intends to generate may be stored in a form of files. For example, the user may previously choose and store the type or the characteristics of the monitoring screen which the user intends to generate. The user's terminal 14 may automatically designate the type or the characteristics of the monitoring screen by loading thus stored file.

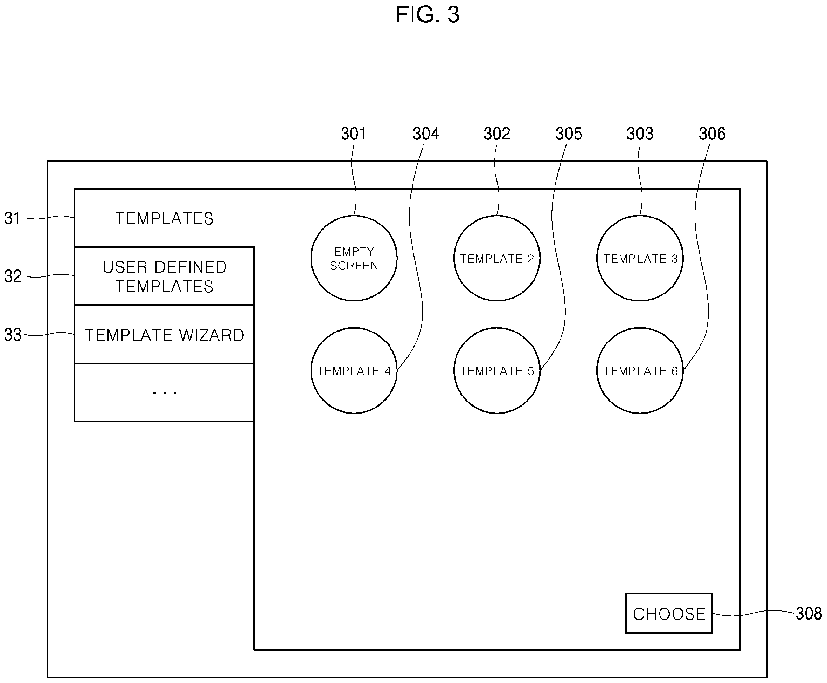

Hereinafter, an embodiment of the method of providing monitoring screen composition functions according to the present disclosure will be described with reference to FIGS. 3 to 6.

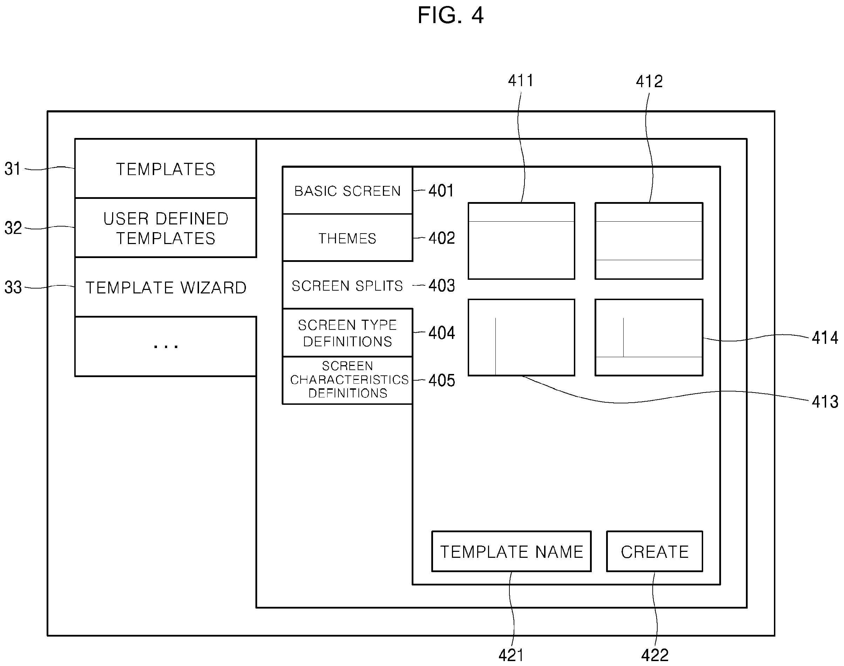

FIGS. 3 and 4 are exemplary views of screen configurations of a monitoring screen composition tool displayed on the user's terminal according to an embodiment of the present disclosure.

According to an embodiment of the present disclosure, the user's terminal 14 may provide the user with a monitoring screen composition guide screen as shown in FIG. 3 through the display unit. The monitoring screen composition guide screen includes a menu of templates 31, a menu of user defined templates 32, and a menu of template wizard 33.

When the menu of templates 31 is chosen, the user's terminal 14 provides the user with templates 302, 303, 304, 305 and 306 which have been previously stored.

At this time, the user's terminal 14 may display the previously stored templates 302, 303, 304, 305 and 306 in a state where the previously stored templates 302, 303, 304, 305 and 306 are respectively arranged according to the number of times chosen by the user. Alternatively, the user's terminal 14 may display the previously stored templates 302, 303, 304, 305 and 306 in a state where the previously stored templates 302, 303, 304, 305 and 306 are respectively arranged in order of time chosen by the user.

If the user chooses one of the templates 302, 303, 304, 305 and 306 displayed on the user's terminal and presses a choose button 308, then a monitoring screen corresponding to the chosen template is outputted on the display unit. Thereafter, the user may modify the monitoring screen displayed on the display unit as desired. Moreover, the user may choose an empty screen 301 to compose a monitoring screen all over again.

When the menu of user defined templates 32 is chosen, the user's terminal 14 provides a list of templates, which the user formerly composed and has stored as a user defined template, on the display unit.

When the user chooses the menu of template wizard 33, a screen as shown in FIG. 4 is displayed on the display unit. In the template wizard, a menu of basic screen 401, a menu of themes 402, a menu of screen splits 403, a menu of screen type definitions 404, a menu of screen characteristics definitions 405 and so on are displayed.

When the menu of basic screen 401 is chosen, the user's terminal 14 displays on the display unit an entering window or a list window in which the user can directly enter elementary items necessary for a monitoring screen configuration, e.g., a screen resolution, a title, an aspect ratio, etc.

When the menu of themes 402 is chosen, the user's terminal 14 displays on the display unit an entering window or a list window in which the user can designate visual elements for configuring the monitoring screen, e.g., a wallpaper, a font, an object color, etc.

When the menu of screen splits 403 is chosen, the user's terminal 14 displays on the display unit a list of layouts 411 to 414 illustrating the splits of a monitoring screen composition screen.

When the menu of screen type definitions 404 is chosen, the user's terminal 14 displays on the display unit a list of the types of the monitoring screen which the user intends to compose, e.g., a single line diagram, a tabular, or an OXC.

When the menu of screen characteristics definitions 405 is chosen, the user's terminal 14 displays on the display unit an entering window or a choice window with respect to the characteristics of the monitoring screen which the user intends to compose. For example, the user's terminal 14 may provide the user with the type of the system 12, i.e., SCADA, DCS, EMS, MG, etc., as a list of characteristics. Further, the user's terminal 14 may provide the user with a list of places or regions, i.e., stations, which each of the system is installed on/in. Then, the user may enter the characteristics of the monitoring screen in an order of, e.g., SCADA (the type of the system) - subway (place) - Seoul (region), through the list provided by the user's terminal 14.

The user who has designated the items with respect to the monitoring screen which the user intends to compose through the template wizard may press a create button 422 to start a monitoring screen composition. When the user presses the create button 422, the user's terminal 14 outputs on the display unit the monitoring composition screen on which items designated by the user are reflected. In particular, if the user designates the type and the characteristics of the screen, the user's terminal 14 may output an initial monitoring screen on the display unit based on the initial generation information corresponding to the type and the characteristics designated by the user as described above.

Meanwhile, when the user enters a template name in a template name entering window 421 and then presses the create button 422, the user's terminal 14 may store a monitoring screen, which the items designated by the user are reflected on, in the template name entered by the user. Thus stored template may be thereafter provided to the user as a user defined template.

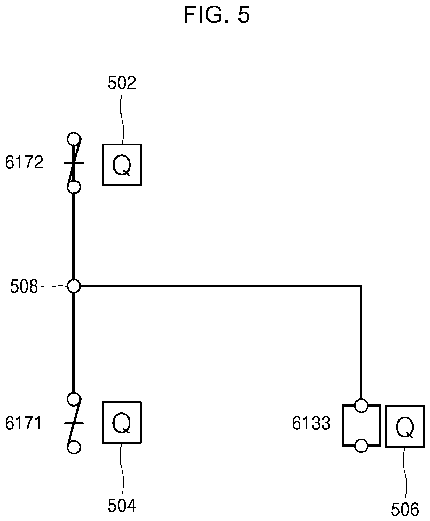

FIG. 5 is an embodiment of the initial monitoring screen outputted on a display unit based on the initial generation information.

As described above, if the user designates the type and the characteristics of the screen, the user's terminal 14 may output the initial monitoring screen (single line diagram) on the display unit as shown in FIG. 5 based on the initial generation information corresponding to the type and the characteristics designated by the user. That is, the user's terminal 14 may display objects 6171, 6172 and 6133 on the display unit as shown in FIG. 5 based on the object information contained in the initial generation information. Further, the user's terminal 14 may represent the coupling relationships among the objects 6171, 6172 and 6133 by solid lines as shown in FIG. 5 based on the link information contained the initial generation information. At this time, if the object 6133 is coupled between the objects 6171 and 6172 as shown in FIG. 5, the user's terminal 14 may automatically generate and display a port 508.

In addition, the user's terminal 14 may display object data 502, 504 and 506 respectively assigned to the objects 6171, 6172 and 6133 on the display unit as shown in FIG. 5 based on the object data information contained in the initial generation information. The object data 502, 504 and 506 may indicate data (e.g., temperature or current) or state information (e.g., the openings and/or closings of the objects) indicated by each of the objects. At this time, the user's terminal 14 may associate real-time DB information with each of the object data 502, 504 and 506 with reference to the object data information, the real-time DB information containing the object data 502, 504 and 506. For example, the user's terminal 14 may associate a specific address in the real-time DB 16 or a real-time DB file stored on the real-time DB 16 with each of the object data 502, 504 and 506. Accordingly, each of the object data 502, 504 and 506 may reflect actual data in real time with reference to the specific address or file of the associated real-time DB 16.

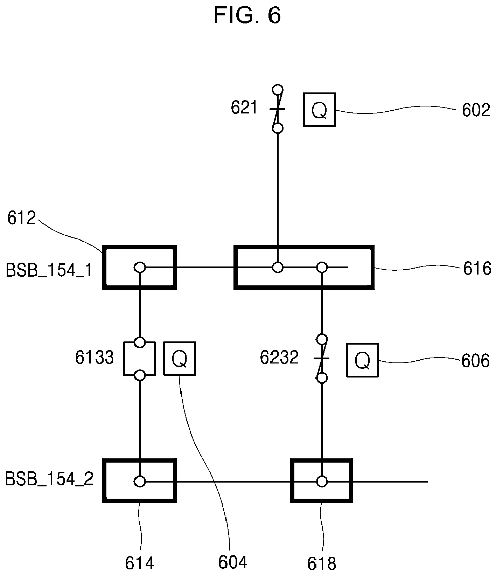

FIG. 6 is another embodiment of the initial monitoring screen outputted on the display unit based on the initial generation information.

As described above, if the user designates the type and the characteristics of the screen, the user's terminal 14 may output the initial monitoring screen (single line diagram) on the display unit as shown in FIG. 6 based on the initial generation information corresponding to the type and the characteristics designated by the user. That is, the user's terminal 14 may display objects 621, 6133, 6232, BSB_154_1 and BSB_154_2 on the display unit as shown in FIG. 6 based on the object information contained in the initial generation information. Further, the user's terminal 14 may represent the coupling relationships among the objects 621, 6133, 6232, BSB_154_1 and BSB_154_2 by solid lines as shown in FIG. 6 based on the link information contained the initial generation information.

At this time, the user's terminal 14 may automatically generate and display ports 612, 614, 616 and 618 on linking points between the objects as shown in FIG. 6. In particular, the user's terminal 14 may generate ports 616 and 618 other than predefined ports 612 and 614 on the links between the objects as shown in FIG. 6 with reference to the link information. For example, the object BSB_154_1 has essentially only one defined port 612 and the object 612 and the object 6232 should be physically coupled to the port 612. Nonetheless, in order to more clearly represent the coupling relationship between the object 621 and the object 6232, the user's terminal 14 may generate to display the port 616 other than the predefined port 612 on the display unit as shown in FIG. 6. Accordingly, the user may advantageously apprehend more clearly each coupling relationship between the objects.

In addition, the user's terminal 14 may display object data 602, 604 and 606 respectively assigned to the objects 621, 6133 and 6232 on the display unit as shown in FIG. 6 based on the object data information contained in the initial generation information. The object data 602, 604 and 606 may indicate data (e.g., temperature or current) or state information (e.g., the openings and/or closings of the objects) indicated by each of the objects. At this time, the user's terminal 14 may associate real-time DB information with each of the object data 602, 604 and 606 with reference to the object data information, the real-time DB information containing the object data 602, 604 and 606. For example, the user's terminal 14 may associate a specific address in the real-time DB 16 or a real-time DB file stored on the real-time DB 16 with each of the object data 602, 604 and 606. Accordingly, each of the object data 602, 604 and 606 may reflect actual data in real time with reference to the specific address or file of the associated real-time DB 16.

The present disclosure described above may be variously substituted, altered, and modified by those skilled in the art to which the present invention pertains without departing from the scope and spirit of the present disclosure. Therefore, the present disclosure is not limited to the above-mentioned exemplary embodiments and the accompanying drawings.

## Claims

1. A method of providing monitoring screen composition functions for controls of a system (12) at a user's terminal (14), the method comprising:
receiving a type of a monitoring screen to be created from a user;
receiving characteristics of the monitoring screen from the user;
obtaining initial generation information corresponding to the type and the characteristics received from the user; and
outputting an initial monitoring screen on a display unit based on the initial generation information.

2. The method according to claim 1, wherein the initial generation information contains one or more object information corresponding to the type and the characteristics, link information between objects, and object data information assigned to each of the objects.

3. The method according to claim 2, wherein outputting an initial monitoring screen on a display unit based on the initial generation information includes:
displaying one or more objects on the display unit based on the object information;
representing the coupling relationships between the objects based on the link information; and
indicating object data corresponding to each of the objects based on the object data information.

4. The method according to claim 2 or 3, wherein outputting an initial monitoring screen on a display unit based on the initial generation information includes generating ports on links between the objects based on the link information.

5. The method according to any one of claims 2 to 4, wherein outputting an initial monitoring screen on a display unit based on the initial generation information includes generating ports other than predefined ports on links between the objects based on the link information.

6. The method according to any one of claims 2 to 5, wherein the object data information contains real-time DB information containing object data assigned to the one or more objects.

7. The method according to any one of claims 1 to 6, wherein the type of the monitoring screen includes at least one of a single line diagram, a tabular and an OLE Control eXtension, OCX.

8. The method according to any one of claims 1 to 7, wherein the characteristics of the monitoring screen includes at least one of the type of the system, a place on which the system is installed and a region in which the system is installed.
